# EUROPÄISCHE PATENTSCHRIFT

(11) **EP 3 146 243 B1**
(45) Veröffentlichungstag und Bekanntmachung des Hinweises auf die Patenterteilung: **01.05.2019**
(21) Anmeldenummer: 15710201.3
(22) Anmeldetag: 18.03.2015
(51) Int. Cl.: F16J 9/00, F16J 9/20

(54) **KOLBENRING MIT NUT IN UMFANGSRICHTUNG**
PISTON RING WITH CIRCUMFERENTIAL GROOVE
SEGMENT DE PISTON AVEC RAINURE CIRCONFÉRENTIEL

(30) Priorität: 19.05.2014 DE 102014209391
(43) Veröffentlichungstag der Anmeldung: 29.03.2017
(73) Patentinhaber: Federal-Mogul Friedberg GmbH, 86316 Friedberg (DE)
(72) Erfinder: MAHL, Markus, 86453 Dasing/Taiting (DE)
(74) Vertreter: Becker Kurig Straus
(86) Internationale Anmeldenummer: PCT/EP2015/055621
(87) Internationale Veröffentlichungsnummer: WO 2015/176843

(56) Entgegenhaltungen:
- WO-A1-2014/072115
- GB-A- 316 802
- US-A- 1 354 287
- US-A- 1 403 008
- US-A- 1 406 763
- US-A- 1 773 878

## Beschreibung

Die vorliegende Erfindung betrifft einen Kolbenring für einen Verbrennungsmotor bzw. für einen Kompressor, insbesondere einen Kolbenring mit einer auf der Lauffläche angeordneten Nut.

Moderne, großvolumige Motoren für Schiffe sind nach wie vor Zweitakt-Dieselmotoren, da diese Art von Motoren so konstruiert werden können, dass deren Drehzahl typischerweise in einem Bereich von ungefähr 50 U/min bis zu 250 U/min (typischerweise unter 100 U/min) liegt und deren Leistung je nach Zahl der Zylinder bis zu ungefähr 100 MW erreichen kann. Derartige großvolumige, langsam laufende Zweitakt-Schiffmotoren wirken bevorzugt unmittelbar auf die Antriebswelle(n) des/der Propeller(s), da aufgrund ihrer Drehzahl auf ein Untersetzungsgetriebe zur Drehzahlreduzierung verzichtet werden kann.

Typischerweise haben derartige großvolumige, Zweitakt-Motoren zwei getrennte Ölkreisläufe, einen für die Motorschmierung und einen für die Zylinderschmierung. Die Zylinderschmierung stellt sicher, dass zu einem geeigneten Zeitpunkt genug Schmieröl zur Verfügung gestellt wird, um eine ausreichende Schmierung der Zylinderoberflächen bzw. der Kolbenringe zu gewährleisten.

Das Zylinderschmieröl wird, abhängig von der Last der Maschine, durch die Laufbuchse in den Kolbenraum eingespritzt. Auf diesem Schmierfilm, dem Tragspiegel, laufen die Kolbenringe. Dabei kommt es unter anderem darauf an, so wenig Schmieröl wie möglich einzuspritzen, um Kosten zu sparen und eine Überschmierung zu verhindern. Die Zylinderschmierung erfolgt beispielsweise im oberen Hub-Drittel, indem Schmieröl durch eine Schmierölpumpe durch Schmieröleinlässe, die beispielsweise in einer Ebene in der Zylinderwand vorgesehen sind, in den Zylinder zugeführt wird, so dass die Schmierung des Kolbens und des Kolbenringes möglichst optimal gewährleistet wird. Die Ölzufuhr in die Zylinder erfolgt üblicherweise im Gasgegendruckverfahren.

Beispielsweise kann ein Schmieröleinspritzsystem eingesetzt werden, das Schmieröl genau dosiert über Düsen in die Zylinder einspritzt. Eine computergesteuerte Anlage registriert, in welcher Position sich ein Kolben befindet und führt dann gezielt Schmieröl zu. Dies geschieht mit hohem Druck, so dass das Schmieröl sehr fein versprüht wird, um eine möglichst gleichmäßige Benetzung der Zylinderlaufbuchse zu erhalten, gezielt aber dort, wo sich die Kolbenringe befinden und wo die Reibung tatsächlich stattfindet.

Berücksichtigt man, dass moderne, großvolumige Zweitakt-Schiffmotoren mit einer Drehzahl von ungefähr 50 U/min bis zu 250 U/min bei einem Hub von bis zu 2500 mm betrieben werden, ist die Zeitspanne, die für die Zufuhr des Schmieröls und die Verteilung des zugeführten Schmieröls zur Verfügung steht, gering bemessen und stellt große Herausforderungen an die Sicherstellung der Qualität der Schmierung. Nimmt man beispielsweise an, dass ein Zylinder einen (Innen-) Durchmesser von 900 mm aufweist und 8 über den Umfang gleichverteilte Zugänge für die Ölzufuhr in der Zylinderwand vorgesehen sind, muss sich das zugeführte Schmieröl ausgehend von den jeweiligen Zugängen in der bereitgestellten Zeitspanne über eine Länge von ca. 350 mm in Umfangsrichtung verteilen.

Herkömmliche Kolbenringe sind beispielsweise aus den Patentdokumenten US1406763A, US1403008A, US1773878A, US1354287A, WO2014/072115A1 und GB316802A bekannt.

Es zeigt sich, dass bei konventioneller Gestaltung des einen oder mehrerer Kolbenringe aufgrund fehlender Druckgradienten in Umfangsrichtung keine bzw. lediglich eine sehr geringe Verteilung des Schmieröls in Umfangsrichtung (maximal ca. 3%) erhalten wird.

Einsatzgebiet der vorliegenden Erfindung sind Verbrennungsmotoren allgemein, auch außerhalb des Schiffseinsatzes.

Aufgabe der vorliegenden Erfindung ist es, einen Kolbenring bereitzustellen, der bei ausreichenden Schmierverhältnissen einen niedrigen Ölverbrauch und einen geringen Leckgasdurchlass (Blow-By) gewährleistet, als auch günstig herstellbar ist.

Die Lösung dieses Problems erfolgt durch einen Kolbenring mit den Merkmalen gemäß dem Kennzeichen des Anspruchs 1.

Vorteilhafte Ausgestaltungen nach der vorliegenden Erfindung sind in den Unteransprüchen enthalten.

Gemäß der vorliegenden Erfindung wird ein Kolbenring mit einer außenseitigen Lauffläche, zwei (Kolbenring-) Flanken und einer innenseitigen Umfangsfläche bereitgestellt, wobei die Lauffläche eine Profilierung in Form einer Nut aufweist. Die Nut ist dabei bezüglich des Querschnitts des Kolbenringes zwischen einem oberen Laufflächenabschnitt und einem unteren Laufflächenabschnitt angeordnet.

Die derart ausgebildete Lauffläche des Kolbenringes kann Schmieröl in einem Hohlraum aufnehmen, der durch die Nut und eine Gegenlauffläche gebildet wird. In der Nut können sich im laufenden Betrieb hydrodynamische Drücke in der Umfangsrichtung aufbauen. Diese hydrodynamische Drücke haben Druckgradienten zur Folge, die Schmierölflüsse veranlassen und eine Umverteilung des Schmieröls bewirken. Die hydrodynamisch bewirkte Umverteilung des Schmieröls führt zu einer Reduzierung der erforderlichen Menge und einer bezüglich der Umfangsrichtung gleichmäßigeren Verteilung des in die Nut zugeführten oder eingespritzten Schmieröls.

Somit wird wie gewünscht ein auf den Umfang bezogen gleichmäßiger Tragspiegel aus Schmieröl erhalten, um ausreichende Schmierverhältnisse zu gewährleisten, möglichst gleichmäßig gegen Leckgasdurchlass (Blow-By) abzudichten (bzw. einen möglich geringen Leckgasdurchlass (Blow-By) zu erhalten), das Schmieröl in Arbeitsrichtung des Kolbes effektiv abstreifen zu können und ein Überlaufen zu ermöglichen.

Die Nut verläuft wellenförmig zwischen der oberen Flanke und der unteren Flanke des Kolbenrings. Auf dieser Weise wird bei jeder Aufwärts- und Abwärtsbewegung das Öl in Richtung des in Laufrichtung weiter hinten liegenden konkaven Abschnitts der Nut gedrängt. Zusammen mit einer entgegengesetzten Bewegung bei einer entsprechenden umgekehrten Bewegung kann der Ring mit einer gewellten Nut das Öl besser verteilen als ein Ring mit einer ebenen gerade verlaufenden Nut.

Die Amplitude der Welle in der wellenförmigen Nut kann sich in ihrem Verlauf in Umfangsrichtung ändern. Dadurch kann ein eventuell auftretender Unterschied im Ölfilm ausgeglichen werden, der durch einen ungleichmäßigen Anpressdruck des Kolbenrings bedingt ist. Alternativ kann sich die Wellenlänge der Welle, in der die wellenförmige Nut verläuft in Umfangsrichtung ändern. Dadurch kann die Nut an einen Kolbenring angepasst werden, der über seinen Umfang eine variierende Vertwistung bzw. Verdrehung zeigt.

In einer beispielhaften Ausführung bildet eine Wellenform der wellenförmigen Nut eine Sinuswelle oder eine Cosinuswelle, die um den Kolbenring verläuft. Diese Ausführung ist einerseits darauf gerichtet, den Beginn des Verlaufs der Nut an den Stoßenden nahe einer Flanke zu beschreiben, was einer Sinuswelle entspricht. Diese Ausführung ist andererseits auch darauf gerichtet, den Beginn des Verlaufs der Nut an den Stoßenden nahe der Mitte zwischen den Flanken zu beschreiben, was einer Cosinuswelle entspricht.

In einer zusätzlichen beispielhaften Ausführung bildet eine Wellenform der wellenförmigen Nut eine asymmetrische bzw. sägezahnartige Welle zwischen den Flanken. Diese Ausführung kann dazu genutzt werden, dem Kolbenring selbst eine Vorzugsrichtung für eine Drehbewegung in der Kolbenringnut des Kolbens zu verleihen. Dieser Effekt kann verstärkt werden, wenn die Nut selber asymmetrisch ausgeführt ist, sodass der Ring in einer Richtung leichter auf einem Ölfilm aufschwimmen kann. Dabei können die stärker wirkenden Teile der Asymmetrie für alle Takte eine effektive Drehbewegung des Kolbenrings erreichen.

Die periodisch variierende Nut bewirkt, dass sich im laufenden Betrieb hydrodynamische Drücke in der Umfangsrichtung aufbauen bzw. auftreten. Diese hydrodynamischen Drücke haben Druckgradienten zu Folge, die Schmierölflüsse veranlassen und eine Umverteilung des Schmieröls erzeugen. Die hydrodynamisch bewirkte Umverteilung des Schmieröls führt zu einer Reduzierung der erforderlichen Menge und einer bezüglich der Umfangsrichtung gleichmäßigeren Verteilung des in die Nut zugeführten oder eingespritzten Schmieröls.

Eine Nut in der Lauffläche eines Kolbenringes kann zwischen zwei im Wesentlichen konvex ballig ausgebildeten Laufflächenanschnitten angeordnet sein. Die Nut weist in Umfangsrichtung einen periodisch variierenden Verlauf auf.

Bei einer anderen beispielhaften Ausführung des Kolbenrings nimmt die Amplitude der Welle in Richtung der Stoßenden zu. Bei einer weiteren beispielhaften Ausführung des Kolbenrings nimmt die Amplitude der Welle in Richtung der Stoßenden ab. Diese Ausführungen sind auf Kolbenringe gerichtet, die an den Stoßenden eine stärkere oder geringere Vertwistung zeigen, als in dem Bereich, der den Stoßenden gegenüberliegt.

Bei einer weiteren beispielhaften Ausführung des Kolbenrings nimmt die Amplitude der Welle in Richtung der Stoßenden ab und/oder die Wellenlänge der Welle nimmt in Richtung der Stoßenden zu. Auch diese Ausführungen sind auf Kolbenringe gerichtet, die an dem Stoßenden eine stärkere oder geringere Vertwistung zeigen, als in dem Bereich, der den Stoßenden gegenüberliegt.

In einer weiteren beispielhaften Ausführungsform des Kolbenrings endet die Nut vor einem Stoßbereich des Kolbenrings. In dieser Ausführung kann verhindert werden, dass das Öl, das sich in der Nut befindet zu dem Kolbenringspalt transportiert wird und an dieser Stelle einen Überschuss an Öl auf einer Zylinderinnenwand hinterlässt.

In einer zusätzlichen Ausführungsform des Kolbenrings weist die Nut über ihre Länge einen konstanten Querschnitt und bevorzugt eine konstante Querschnittsform, mit konstanter Tiefe und konstanter Breite auf. Diese Beschränkung betrifft nicht die Endbereiche der Nut, die einen Übergangsbereich mit einer Querschnittsänderung zwischen 1 und 10mm umfassen können, und die durch die Herstellung der Nut bedingt sein können.

Bei einer weiteren Ausführung des Kolbenrings weist die Nut einen runden Querschnitt auf. Bei einer weiteren Ausführung des Kolbenrings weist die Nut einen ovalen bzw. elliptischen Querschnitt auf. Bei einer anderen Ausführung des Kolbenrings weist die Nut einen rechteckigen Querschnitt auf. Bei einer zusätzlichen Ausführung des Kolbenrings weist die Nut einen Trapezförmigen Querschnitt aufweist.

Eine im Querschnitt runde Nut hat den Vorteil, dass sie relativ leicht spanend oder spanlos hergestellt werden kann. Eine im Querschnitt runde Nut weist den zusätzlichen Vorteil auf, dass sich relativ große Fertigungstoleranzen ergeben, da sich ein Winkel zwischen der Lauffläche und dem Rand der Nut nur gering ändert, wenn die Ausrichtung des Werkzeugs abweicht. Eine im Querschnitt runde oder elliptische Form kann nur schlecht einen Winkelunterscheid zwischen einer oberen bzw. unteren Lauffläche und einer Tangente an der Nut erreichen. Eine rechteckige und trapezförmige Nut hat den Vorteil, dass sich Abweichungen in der Bearbeitungstiefe überhaupt nicht auf einen Winkel zwischen einer Flanke der Nut und der Lauffläche auswirken.

Bei einer weiteren Ausführung des Kolbenrings weist die im Querschnitt runde Nut einen Radius von 0,2 bis 2 mm auf. Bei einer weiteren Ausführung des Kolbenrings weist die im Querschnitt runde Nut einen Radius von 0,4 bis 1,6 mm auf. Bei einer weiteren Ausführung des Kolbenrings weist die im Querschnitt runde Nut einen Radius von 0,6 bis 1,2 mm auf. Bei einer weiteren Ausführung des Kolbenrings weist die im Querschnitt runde Nut einen Radius von 0,2 bis 0,4 mm auf. Bei einer weiteren Ausführung des Kolbenrings weist die im Querschnitt runde Nut einen Radius von 0,4 bis 0,6 mm auf. Bei einer weiteren Ausführung des Kolbenrings weist die im Querschnitt runde Nut einen Radius von 1,2 bis 1,6 mm auf. Bei einer weiteren Ausführung des Kolbenrings weist die im Querschnitt runde Nut einen Radius von 1,6 bis 2 mm auf. Diese Werte decken den Bereich von automotiven Anwendungen bis hin zu Großmotoren ab. Die tatsächlich Größe der Nut wird zum Teil auch durch den verwendeten Motor und den geplanten Schmierstoff sowie der durchschnittlichen Kolbengeschwindigkeit des Motors abhängen.

Bei einer zusätzlichen Ausführungsform umfasst die Nut in dem Kolbenring eine obere Nutflanke und eine untere Nutflanke. Die Nutflanke wird bei einer runden Nut als die Tangente der Nut an einer Kante oder einem Wendepunkt beim Übergang in eine ausgerundete Kante angesehen. Die folgenden Winkel betreffen dabei jeweils die Tangente zu einer Tangente der Lauffläche an der Kante oder dem Wendepunkt beim Übergang in die ausgerundete Kante. Somit sind die folgenden Winkel auch für runde Nuten und ballige Laufflächen definiert.

In einer Ausführungsform schließt die obere Nutflanke (bzw. deren Tangente) mit dem oberen Laufflächenabschnitt (bzw. dessen Tangente) einen oberen Winkel von 45° bis 135° ein. Bei einer anderen Ausführungsform schließt die obere Nutflanke (bzw. deren Tangente) mit dem oberen Laufflächenabschnitt (bzw. dessen Tangente) einen oberen Winkel von 60° bis 120° ein. Bei einer weiteren Ausführungsform schließt die obere Nutflanke (bzw. deren Tangente) mit dem oberen Laufflächenabschnitt (bzw. dessen Tangente) einen oberen Winkel von 70° bis 110° ein.

In einer Ausführungsform schließt die untere Nutflanke (bzw. deren Tangente) mit dem unteren Laufflächenabschnitt (bzw. dessen Tangente) einen unteren Winkel von 90° bis 170° ein. Bei einer anderen Ausführungsform schließt die untere Nutflanke (bzw. deren Tangente) mit dem unteren Laufflächenabschnitt (bzw. dessen Tangente) einen unteren Winkel von 110° bis 160° ein. Bei einer weiteren Ausführungsform schließt die untere Nutflanke (bzw. deren Tangente) mit dem unteren Laufflächenabschnitt (bzw. dessen Tangente) einen unteren Winkel von 120° bis 150° ein. Die genannten Winkel beziehen sich auf Gerade Abschnitte der Lauffläche bzw. der Nut. Im Falle von gekrümmten Nuten oder Laufflächen sollen zur Bestimmung die Winkel zwischen den jeweiligen Tangenten der Nut bzw. der Lauffläche herangezogen werden, die an der Kante vorliegen oder an der die Nut bzw. die Lauffläche an eine Kantenabrundung übergeht. Dies ist dann besonders einfach festzustellen, wenn die Kante mit einem definierten Radius abgerundet wurde.

In einer weiteren zusätzlichen Ausführungsform der vorliegenden Erfindung ist der obere Winkel um 2° bis 30° kleiner als der untere Winkel. In einer anderen weiteren Ausführungsform der vorliegenden Erfindung ist der obere Winkel um 4° bis 20° kleiner als der untere Winkel. In einer anderen zusätzlichen Ausführungsform der vorliegenden Erfindung ist der obere Winkel um 6° bis 10° kleiner als der untere Winkel. Dies kann bei im Querschnitt kreisförmigen Nuten insbesondere durch eine entsprechende Form der jeweiligen Laufflächen erreicht werden.

In einer weiteren Ausführungsform des Kolbenrings ist der obere Winkel zwischen 70 und 100 Grad, wobei der untere Winkel zwischen 120° bis 150° aufweist, wobei bevorzugt der obere Winkel zwischen 20 und 30° kleiner ist als der untere Winkel.

Bei einer zusätzlichen Ausführungsform weist eine Kante des oberen Winkels einen oberen Krümmungsradius von 10 bis 50 µm auf. Bei einer anderen Ausführungsform weist die Kante des unteren Winkels einen unteren Krümmungsradius von 40µm bis 120 µm auf. In einer weiteren Ausführungsform ist der obere Krümmungsradius um 10µm bis 40µm kleiner als der untere Krümmungsradius. Diese Abmessungen lassen einen vorteilhaften Abstreifeffekt von Öl auf einer Zylinderinnenwand erwarten.

Bei einer weitern Ausführungsform des Kolbenrings weist die außenseitige Lauffläche einen Krümmungsradius zwischen 10 und 60mm, bevorzugt zwischen 20 und 40mm und weiter bevorzugt zwischen 25 und 30mm auf.

Bei einer anderen Ausführungsform des Kolbenrings ist die Zahl der Perioden des wellenförmigen Verlaufs ganzzahlig, diese Ausführung gestattet insbesondere Kolbenringe mit symmetrischen Nuten.

Bei einer anderen Ausführungsform des Kolbenrings sind die Laufflächen des Kolbenringes im Wesentlichen symmetrisch ausgebildet.

Bei einer anderen Ausführung beträgt die Zahl der Perioden des wellenförmigen Verlaufs zwischen einschließlich 4 und einschließlich 36. Bei einer weiteren Ausführung beträgt die Zahl der Perioden des wellenförmigen Verlaufs zwischen einschließlich 6 und einschließlich 24. Bei einer zusätzlichen Ausführung beträgt die Zahl der Perioden des wellenförmigen Verlaufs zwischen einschließlich 8 und einschließlich 12.

In einer beispielhaften Ausführung des Kolbenrings ist die Nut aus zwei verschiedenen Arten von Abschnitten zusammengesetzt. Eine erste Art von Abschnitten verläuft in Umfangsrichtung. Eine zweite Art von Abschnitten verläuft in Bezug auf die erste Art Abschnitte in einem spitzen Winkel. Die zwei Arten von Abschnitten sind jeweils abwechselnd an ihren Enden miteinander verbunden.

In einer zusätzlichen Ausführung des Kolbenrings endet die Nut in Reservoiren, die an den Stoßenden des Kolbenrings angeordnet sind.

Bei einer weiteren Ausführungsform des Kolbenrings läuft die Nut 2 zu den Stoßenden verjüngt aus. Durch eine Nut deren Querschnitt sich im Bereich der Stoßenden langsam verringert kann an Stoßenden der hier besonders auftretende Verschleiß verringert werden.

Die Erfindung wird nachfolgend anhand der in der Zeichnung anhand der dargestellten schematischen Figuren von Ausführungsbeispielen näher erläutert.
Figur 1 zeigt eine perspektivische Ansicht auf einen herkömmlichen Kolbenring mit einer wellenförmigen Nut.
Figur 2 zeigt eine Schnittansicht in Axialrichtung durch eine Ausführung eines Kolbenrings mit rechteckiger Nut.
Figur 3 zeigt eine Schnittansicht in Axialrichtung durch eine Ausführung eines Kolbenrings mit runder Nut.
Figuren 4A bis 5B zeigen eine Ansicht der Lauffläche von unterschiedlichen Ausführungsformen herkömmlicher Kolbenringe mit Nut.
Figuren 6A bis 6C zeigen eine Ansicht der Lauffläche eines erfindungsgemäßen Kolbenrings mit Nut.

Sowohl in den Figuren als auch in der Beschreibung werden gleiche Bezugszeichen für gleiche oder Ähnliche Elemente und Komponenten verwendet.

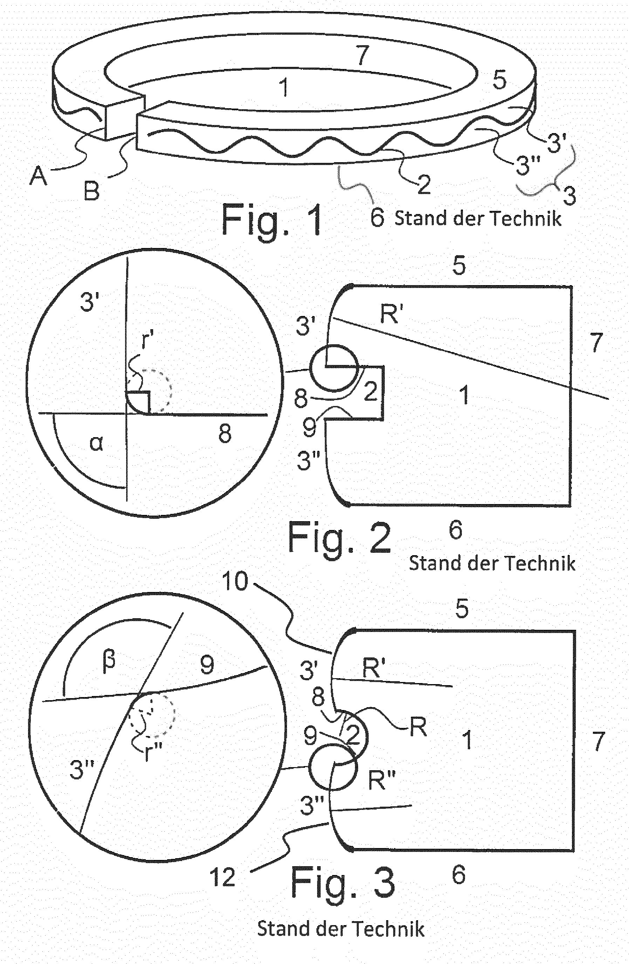

Figur 1 zeigt eine perspektivische Ansicht auf einen herkömmlichen Kolbenring 1 mit einer wellenförmigen Nut 2. Die hier wellenförmig dargestellte Nut 2 verläuft auf der Außenseite des Kolbenrings 1, die eine Lauffläche 3 des Kolbenringes 1 bzw. eine außenseitige Umfangsfläche bildet. Die Lauffläche 3 des Kolbenrings 1 umfasst einen oberen Laufflächenabschnitt 3', der näher am Brennraum eines Motors liegt. Die Lauffläche 3 des Kolbenrings 1 umfasst einen unteren Laufflächenabschnitt 3", der näher an einem Ölraum bzw. Kurbelgehäuse des Motors liegt. Oben ist eine obere, dem Brennraum zugewandte Flanke 5 des Kolbenrings zu erkennen. Die untere, dem Kurbelgehäuse zugewandte Flanke 6 ist durch den Kolbenring 1 verdeckt. Das Bezugszeichen 7 bezeichnet eine innenseitige Umfangsfläche 7. Der Kolbenring endet am Stoß an den beiden Stoßflächen A und B. Die Nut 2 ist so dargestellt, dass sie vor den Stoßflächen A bzw. B endet. Dadurch kann Öl, das sich in der Nut 2 gesammelt hat, nicht an den Stoßflächen A bzw. B austreten.

Figur 2 zeigt eine Schnittansicht in Axialrichtung durch eine Ausführung eines Kolbenrings 1 mit rechteckiger Nut 2. Anstelle der dargestellten rechteckigen Nut 2 kann ebenfalls eine im Querschnitt trapezförmige Nut 2 verwendet werden. Die Nut 2 ist hier in der Mitte dargestellt, bei einer wellenförmigen Nut 2variiert die vertikale Position der Nut im Querschnitt. Die Nut weist dabei eine obere Nutflanke 8 und eine untere Nutflanke 9 auf. Auch im Querschnitt sind die dem Brennraum zugewandte obere Flanke 5, die dem Kurbelgehäuse zugewandte untere Flanke 6 und die innenseitige Umfangsfläche 7 gekennzeichnet. Die gesamte Lauffläche 3 weist eine gewisse Balligkeit auf, der ein Krümmungsradius R' zugeordnet ist. Der obere und der untere Laufflächenabschnitt 3', 3" weisen somit eine gemeinsame Balligkeit mit dem Krümmungsradius R' auf. In der Detailvergrößerung ist der Übergang zwischen der oberen Lauffläche 3' zu der oberen Nutflanke 8 dargestellt. Die Kante ist mit einem oberen Kantenradius r' ausgerundet. Der obere Kantenradius r' kann durch eine Bearbeitung entstanden sein oder durch einen gesonderten spanenden oder umformenden Prozess erzeugt worden sein. Ein oberer Winkel α ist zwischen der Lauffläche 3' zu der oberen Nutflanke 8 dargestellt. Zur Übersichtlichkeit wurde auf eine Detailansicht der unteren Kante verzichtet. Diese ist in Figur 3 dargestellt.

Figur 3 zeigt eine Schnittansicht in Axialrichtung durch eine Ausführung eines Kolbenrings 1 mit runder Nut 2. Anstelle der dargestellten kreisrunden Nut 2 kann ebenfalls eine im Querschnitt elliptische, parabelförmige oder ovale Nut 2 verwendet werden. Die kreisrunde Nut 2 weist einen Nutradius von R auf. Die Nut 2 ist hier ebenfalls in der Mitte dargestellt, bei einer wellenförmigen Nut 2variiert die vertikale Position der Nut im Querschnitt. Die Nut weist dabei eine obere Nutflanke 8 und eine untere Nutflanke 9 auf, die jeweils durch die Tangenten der runden Nut an den Kanten zu den Laufflächenabschnitten 3', 3" definiert sind. Auch hier sind die dem Brennraum zugewandte obere Flanke 5, die dem Kurbelgehäuse zugewandte untere Flanke 6 und die innenseitige Umfangsfläche 7 des Kolbenrings 1 gekennzeichnet. Der obere Laufflächenabschnitt 3' weist eine Balligkeit auf, der ein oberer Krümmungsradius R' zugeordnet ist der größer ist als der entsprechende Radius von Figur 2. Der untere Laufflächenabschnitt 3" weist eine Balligkeit auf, der ein unterer Krümmungsradius R". In Figur 3 sind beide Krümmungsradien kleiner als der von Figur 2. In dieser Ausführung ist der obere Radius R' ist dabei größer als der untere Radius R". In der Detailvergrößerung ist der Übergang zwischen der unteren Lauffläche 3" zu der unteren Nutflanke 9 dargestellt. Die Kante ist mit einem unteren Kantenradius r" ausgerundet. Wie der obere Kantenradius r' kann auch der untere Kantenradius r" durch eine Bearbeitung entstanden sein oder durch einen gesonderten spanenden oder umformenden Prozess erzeugt worden sein. Es ist möglich auch unterschiedliche Krümmungsradien r' r" in einem Kolbenring einzusetzen, bevorzugt wird r" > r' gewählt, um ein besseres Abstreifen von Öl bei einem Abwärtshub des Kolbens zu erreichen. Ein unterer Winkel β ist zwischen der unteren Lauffläche 3" und der unteren Nutflanke 9 dargestellt. Im vergleich zu dem Winkel α ist der Winkel β größer, um ein besseres Abstreifen von Öl bei einem Abwärtshub/Arbeitshub des Kolbens zu erreichen. Zur besseren Übersichtlichkeit der Figur 3 wurde auf eine Detailansicht der oberen Kante verzichtet. Es wird darauf hingewiesen dass die Winkel α und β auch in einem einzelnen Kolbenring zusammen verwendet werden können wobei α < β bevorzugt ist.

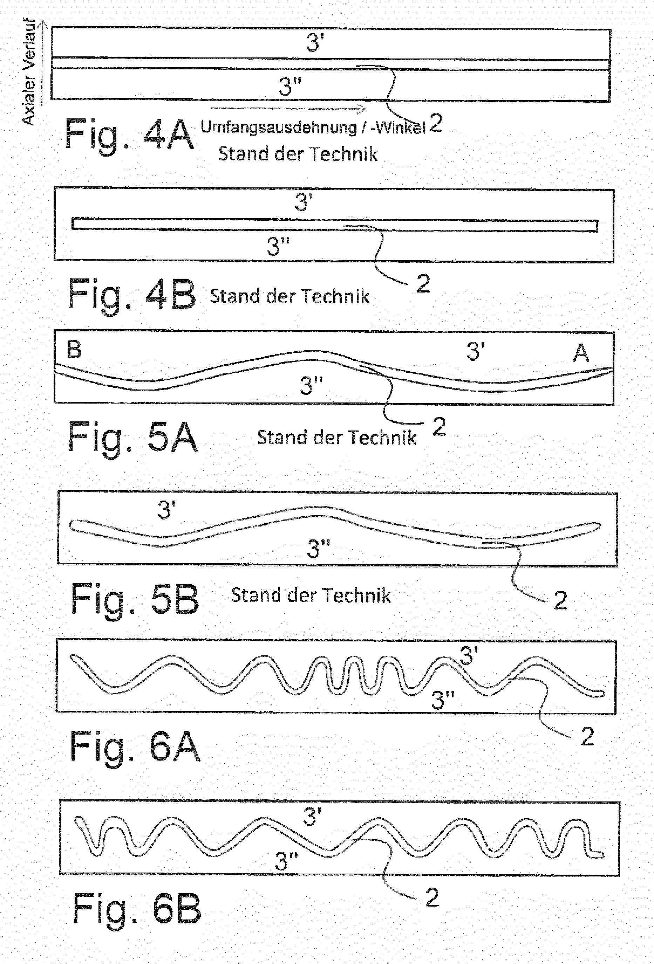

Figuren 4A bis 5B zeigen Ansichten von Laufflächen von unterschiedlichen Ausführungsformen eines herkömmlichen Kolbenrings mit Nut.

Figur 4A zeigt eine Abwicklung einer Lauffläche einer einfachen herkömmlichen Ausführungsform mit einer durchgehenden geraden Nut 2, die sich von der dem einen Stoßende auf der rechten Seite, das dem Stoßende A von Figur 1 entspricht, bis zu dem andern Stoßende auf der linken Seite, das dem Stoßende B von Figur 1 entspricht, erstreckt. Hier ist die Nut zum Stoß bzw. zu den Stoßenden offen, sodass Öl, das sich in der Nut gesammelt hat am Stoß bzw. an den Stoßenden austreten kann. Die Nut 2 teilt die Lauffläche in einen oberen Laufflächenabschnitt 3' und in einen unteren Laufflächenabschnitt 3".

Figur 4B zeigt eine Abwicklung einer Lauffläche von einer einfachen herkömmlichen Ausführungsform entsprechend Figur 4A wobei die gerade Nut 2 vor dem Stoßende auf der rechten Seite, bzw. dem Stoßende auf der linken Seite endet. Hier ist die Nut zum Stoß bzw. zu den Stoßenden geschlossen, sodass Öl, das sich in der Nut gesammelt hat, nicht am Stoß bzw. an den Stoßenden austreten kann. In Figur 4B ist der obere Laufflächenabschnitt 3' jeweils im Bereich der Stoßenden mit dem unteren Laufflächenabschnitt 3" verbunden.

Figur 5A zeigt eine abgewickelte Lauffläche von einer einfachen herkömmlichen Ausführungsform entsprechend Figur 4A wobei die Nut 2, die zwischen den Laufflächenabschnitten 3' 3" verläuft, als gewellte Nut ausgeführt ist. Wie in Figur 4A verläuft die Nut entlang der gesamten Länge des Kolbenrings bzw. der Lauffläche und endet an den Stoßenden. Auch hier kann wie in Figur 4A Öl, das sich in der Nut gesammelt hat, am Stoß bzw. an den Stoßenden austreten. In Figur 5A läuft die Nut 2 an dem Stoßende B gerade aus. In Figur 5B läuft die Nut 2 an dem Stoßende A verjüngt aus. Es ist ebenfalls vorgesehen, dass die Nut 2 an beiden Stoßenden A, B gerade ausläuft. Es ist ebenfalls vorgesehen, dass die Nut 2 an beiden Stoßenden A, B verjüngt ausläuft.

Figur 5B zeigt eine abgewickelte Lauffläche von einer einfachen herkömmlichen Ausführungsform entsprechend Figur 5A wobei die gewellte Nut 2 vor dem Stoßende auf der rechten Seite, bzw. dem Stoßende auf der linken Seite endet. Hier ist die Nut zum Stoß bzw. zu den Stoßenden geschlossen, sodass Öl, das sich in der Nut gesammelt hat, nicht am Stoß bzw. an den Stoßenden austreten kann. In Figur 5B ist der obere Laufflächenabschnitt 3' jeweils im Bereich der Stoßenden mit dem unteren Laufflächenabschnitt 3" verbunden.

Figuren 6A und 6B zeigen Ansichten von Laufflächen von unterschiedlichen Ausführungsformen eines erfindungsgemäßen Kolbenrings mit Nut.

In den Figuren 6A bis 6C sind verschiedene Verläufe von gewellt verlaufenden Nuten 2 dargestellt. Die Figuren 6A bis 6C zeigen abgewickelte Laufflächen. In der Abwicklung ist der Ringrücken in der Mitte zwischen den Stoßenden und nicht gegenüber der Stoßenden angeordnet. In den Figuren 6A bis 6C sind die oberen Laufflächenabschnitte 3' jeweils im Bereich der Stoßenden mit den unteren Laufflächenabschnitten 3" verbunden. In Figur 5B war die Nut zumindest im Wesentlichen spiegelsymmetrisch gegenüber dem Ringrücken dargestellt. In den Figuren 6A bis 6C sind die Nuten im Wesentlichen punktsymmetrisch dargestellt. In den Figuren 6A und 6B verändert sich die Wellenlänge der Nut 2 in Verlauf zwischen den Stoßenden und dem Ringrücken.

In Figur 6A weist die Nut am Ringrücken eine kürzere Wellenlänge auf als an den Stoßenden. Hier kann der Ring am Ringrücken größere Mengen Öl in der Nut 2 aufnehmen, wodurch verhindert werden kann dass größere Mengen Öl am Stoß vorliegen.

In Figur 6B weist die Nut am Ringrücken eine längere Wellenlänge auf als an den Stoßenden. Hier kann der Ring am Ringrücken weniger Öl in der Nut 2 aufnehmen, wodurch erreicht werden kann dass die besonders von Verschleiß betroffenen Stoßenden besser geschmiert werden.

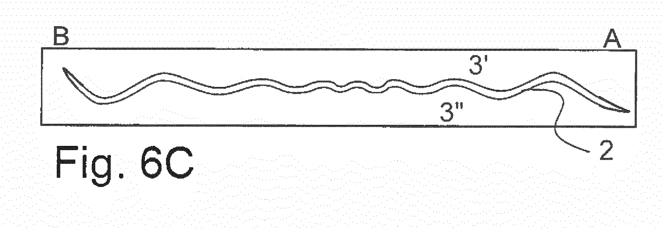

Figur 6C entspricht im Wesentlichen der Figur 6A, wobei zusätzlich eine Amplitude des Verlaufs der Nut 2 im Bereich des Ringrückens verringert ist. Hier kann der Ring am Ringrücken weniger Öl in der Nut 2 aufnehmen als an den Stoßenden. In Figur 6C läuft die Nut 2 zu den Stoßenden A, B verjüngt aus. Es ist ebenfalls vorgesehen dass die Nut 2 auch in anderen Ausführungen zu den Stoßenden A, B verjüngt ausläuft.

Es kann ebenso vorgesehen sein, die Amplitude am Ringrücken zu erhöhen, was jedoch hier nicht weiter ausgeführt ist, da dies lediglich die Beschreibung unnötig in die Länge ziehen würde.

Es wurden einige mögliche und durch die Ansprüche abgedeckte Ausführungsformen in der Zeichnung nicht mit einer gesonderten Figur gewürdigt, weshalb auch alle Kombinationen von Merkmalen die nur einzeln in Figuren offenbart sind als offenbart angesehen werden sollen. Es ist zudem nicht dargestellt dass die Nut einen Querschnitt in Form eines Viertelkreises aufweisen kann. Es wurden in der Zeichnung auch nicht für alle beanspruchten Winkelwerte eine einzelne Zeichnung angefertigt.

### Bezugszeichen

- 1:: ein Kolbenring
- 2:: eine Aussparung bzw. Nut
- 3:: eine Lauffläche des Kolbenringes bzw. eine außenseitige Umfangsfläche
- 3': oberer Laufflächenabschnitt (dem Brennraum zugewandt)
- 3": unterer Laufflächenabschnitt (dem Ölraum bzw. Kurbelgehäuse zugewandt)

- 5:: eine dem Brennraum zugewandte Flanke
- 6:: eine dem Ölraum bzw. dem Kurbelgehäuse zugewandte Flanke
- 7:: eine innenseitige Umfangsfläche

- 8: Obere Nutflanke (dem Brennraum zugewandt)
- 9: Untere Nutflanke (dem Ölraum bzw. Kurbelgehäuse zugewandt)

- 10:: ein erster konvex ballig ausgebildeter Abschnitt des Laufflächenprofils
- 12:: ein zweiter konvex ballig ausgebildeter Abschnitt des Laufflächenprofils
- 14:: Ölreservoir das mit der Nut verbunden ist

- A:: erstes Stoßende
- B:: zweites erstes Stoßende

- r':: Radius der Ausrundung der Kante zwischen oberer Lauffläche und Nut
- r":: Radius der Ausrundung der Kante zwischen unterer Lauffläche und Nut

- R:: Radius einer kreisrunden Nut
- R':: Radius der oberen Lauffläche oder der gesamten Lauffläche
- R":: Radius der unteren Lauffläche

- α:: Winkel zwischen oberer Lauffläche und Nut bzw. deren Tangenten
- β:: Winkel zwischen unterer Laufflä 1/3 bzw. deren Tangenten

## Patentansprüche

1. Kolbenring mit einer außenseitigen Lauffläche (3), zwei Flanken (5, 6) und einer innenseitigen Umfangsfläche (7), wobei die Lauffläche (3) eine Profilierung mit einer Nut (2) aufweist, wobei die Nut (2) bezüglich des Querschnitts des Kolbenringes (1) zwischen einem oberen Laufflächenabschnitt (3') und einem unteren Laufflächenabschnitt (3") angeordnet ist, wobei die Nut (2) wellenförmig zwischen den Flanken (5, 6) verläuft, **dadurch gekennzeichnet, dass** sich die Amplitude und/oder die Wellenlänge der Welle, in der die wellenförmige Nut (2) verläuft, in Umfangsrichtung ändert.

2. Kolbenring nach Anspruch 1, **dadurch gekennzeichnet, dass** die wellenförmige Nut (2) eine Sinuswelle oder eine Cosinuswelle bildet, die um den Kolbenring verläuft, oder dass die Nut in einer asymmetrischen bzw. sägezahnartigen Welle zwischen den Flanken (5, 6) verläuft.

3. Kolbenring nach Anspruch 1, oder 2, **dadurch gekennzeichnet, dass** die Amplitude der Welle in Richtung der Stoßenden zunimmt und/oder dass die Wellenlänge der Welle in Richtung der Stoßenden abnimmt.

4. Kolbenring nach einem der Ansprüche 1 bis 2, **dadurch gekennzeichnet, dass** die Amplitude der Welle in Richtung der Stoßenden abnimmt und/oder dass die Wellenlänge der Welle in Richtung der Stoßenden zunimmt.

5. Kolbenring nach einem der vorstehenden Ansprüche, **dadurch gekennzeichnet, dass** die Nut (2) vor einem Stoßbereich des Kolbenrings endet.

6. Kolbenring nach einem der vorstehenden Ansprüche, **dadurch gekennzeichnet, dass** die Nut (2) über ihre Länge einen konstanten Querschnitt und bevorzugt eine konstante Querschnittsform, mit konstanter Tiefe und konstanter Breite aufweist.

7. Kolbenring nach einem der vorstehenden Ansprüche, **dadurch gekennzeichnet, dass** die Nut (2) einen runden, ovalen, elliptischen, rechteckigen oder trapezförmigen Querschnitt aufweist.

8. Kolbenring nach Anspruch 7, wobei der runde Querschnitt der Nut (2) bevorzugt einen Radius von 0,2 bis 2 mm, bevorzugt von 0,4 bis 1,6 mm und weiter bevorzugt von 0,6 bis 1,2 aufweist.

9. Kolbenring nach einem der vorstehenden Ansprüche, **dadurch gekennzeichnet, dass** die Nut (2) eine obere Nutflanke (8) und eine untere Nutflanke (9) aufweist,
wobei die obere Nutflanke (8) mit dem oberen Laufflächenabschnitt (3') einen oberen Winkel 45° bis 135° einschließt, bevorzugt 60° bis 120°, weiter bevorzugt 70° bis 110° einschließt, und wobei die untere Nutflanke (9) mit dem unteren Laufflächenabschnitt (3") einen unteren Winkel 90° bis 170°, bevorzugt 110° bis 160° und weiter bevorzugt 120° bis 150° einschließt.

10. Kolbenring nach Anspruch 9, **dadurch gekennzeichnet, dass** der obere Winkel um 2° bis 30° bevorzugt 4° bis 20° und weiter bevorzugt 6° bis 10° kleiner ist als der untere Winkel.

11. Kolbenring nach Anspruch 9 oder 10, **dadurch gekennzeichnet, dass** eine Kante des oberen Winkels einen oberen Krümmungsradius von 10 bis 50 µm aufweist, dass die Kante des unteren Winkels einen unteren Krümmungsradius von 40µm bis 120 µm aufweist, und wobei bevorzugt der obere Krümmungsradius um 10µm bis 40µm kleiner ist als der untere Krümmungsradius.

12. Kolbenring nach einem der vorstehenden Ansprüche, **dadurch gekennzeichnet, dass** die außenseitige Lauffläche (3) einen Krümmungsradius zwischen 10 und 60mm, bevorzugt zwischen 20 und 40mm und weiter bevorzugt zwischen 25 und 30mm aufweist.

13. Kolbenring nach einem der vorstehenden Ansprüche, **dadurch gekennzeichnet, dass** die Zahl der Perioden des wellenförmigen Verlaufs ganzzahlig sind, und/oder, dass die Nut (2) in der Aufsicht auf die Lauffläche (3) des Kolbenringes (1) im Wesentlichen symmetrisch ausgebildet ist und/oder, dass die Zahl der Perioden des Tiefenverlaufs und des Breitenverlaufs in einem Bereich zwischen einschließlich 4 und einschließlich 36, bevorzugt zwischen 6 und 24 und weiter bevorzugt zwischen 8 und 12 liegt.

14. Kolbenring nach einem der vorstehenden Ansprüche, **dadurch gekennzeichnet, dass** die Nut (2) aus zwei verschiedenen Arten von Abschnitten zusammengesetzt ist, wobei die erste Art von Abschnitten in Umfangsrichtung verläuft und die zweite Art von Abschnitten mit der ersten Art Abschnitten in einem spitzen Winkel verbunden ist, wobei die zwei Arten von Abschnitten jeweils abwechselnd an ihren Enden miteinander verbunden sind.

15. Kolbenring nach einem der vorstehenden Ansprüche, **dadurch gekennzeichnet, dass** die Nut (2) in Reservoiren (14) endet.

16. Kolbenring nach einem der vorstehenden Ansprüche, **dadurch gekennzeichnet, dass** die Nut (2) zu den Stoßenden (A, B) verjüngt ausläuft.

## Claims

1. A piston ring having an external running surface (3), two flanks (5, 6), and an internal circumferential surface (7), wherein the running surface (3) has profiling with a groove (2), wherein the groove (2) is situated, with respect to the cross section of the piston ring (1), between an upper running surface section (3') and a lower running surface section (3"), wherein the groove (2) undulates between the flanks (5, 6), **characterized in that** the amplitude and/or the wavelength of the wave in which the groove (2) undulates change(s) in the circumferential direction.

2. The piston ring according to Claim 1, **characterized in that** the undulating groove (2) forms a sine wave or a cosine wave that extends around the piston ring, or that the groove extends in an asymmetrical or sawtooth-like wave between the flanks (5, 6).

3. The piston ring according to Claim 1 or 2, **characterized in that** the amplitude of the wave increases in the direction of the butt ends, and/or that the wavelength of the wave decreases in the direction of the butt ends.

4. The piston ring according to one of Claims 1 to 2, **characterized in that** the amplitude of the wave decreases in the direction of the butt ends, and/or that the wavelength of the wave increases in the direction of the butt ends.

5. The piston ring according to one of the preceding claims, **characterized in that** the groove (2) ends in front of an abutment area of the piston ring.

6. The piston ring according to one of the preceding claims, **characterized in that** the groove (2) over its length has a constant cross section and preferably a constant cross-sectional shape, with a constant depth and a constant width.

7. The piston ring according to one of the preceding claims, **characterized in that** the groove (2) has a circular, oval, elliptical, rectangular, or trapezoidal cross section.

8. The piston ring according to Claim 7, wherein the circular cross section of the groove (2) preferably has a radius of 0.2 to 2 mm, preferably 0.4 to 1.6 mm, and more preferably 0.6 to 1.2 mm.

9. The piston ring according to one of the preceding claims, **characterized in that** the groove (2) has an upper groove flank (8) and a lower groove flank (9), wherein the upper groove flank (8) together with the upper running surface section (3') encloses an upper angle of 45° to 135°, preferably 60° to 120°, more preferably 70° to 110°, and wherein the lower groove flank (9) together with the lower running surface section (3") encloses a lower angle of 90° to 170°, preferably 110° to 160°, and more preferably 120° to 150°.

10. The piston ring according to Claim 9, **characterized in that** the upper angle is smaller than the lower angle by 2° to 30°, preferably 4° to 20°, and more preferably 6° to 10°.

11. The piston ring according to Claim 9 or 10, **characterized in that** an edge of the upper angle has an upper radius of curvature of 10 µm to 50 µm, that the edge of the lower angle has a lower radius of curvature of 40 µm to 120 µm, and wherein the upper radius of curvature is preferably smaller than the lower radius of curvature by 10 µm to 40 µm.

12. The piston ring according to one of the preceding claims, **characterized in that** the external running surface (3) has a radius of curvature between 10 and 60 mm, preferably between 20 and 40 mm, and more preferably between 25 and 30 mm.

13. The piston ring according to one of the preceding claims, **characterized in that** the number of periods of the undulating progression is a whole number, and/or that the groove (2) has an essentially symmetrical design in a view onto the running surface (3) of the piston ring (1), and/or that the number of periods of the depth profile and of the width profile is in a range between 4 and 36 inclusive, between 6 and 24 inclusive, and more preferably between 8 and 12 inclusive.

14. The piston ring according to one of the preceding claims, **characterized in that** the groove (2) is made up of two different types of sections, wherein the first type of section extends in the circumferential direction and the second type of section is connected to the first type of section at an acute angle, wherein the two types of sections are in each case joined together in alternation at their ends.

15. The piston ring according to one of the preceding claims, **characterized in that** the groove (2) ends in reservoirs (14).

16. The piston ring according to one of the preceding claims, **characterized in that** the groove (2) tapers toward the butt ends (A, B).

## Revendications

1. Segment de piston avec une surface de roulement extérieure (3), deux flancs (5, 6) et une surface circonférentielle intérieure (7), dans lequel la surface de roulement (3) présente un profilage avec une rainure (2), dans lequel la rainure (2) est agencée par rapport à la section transversale du segment de piston (1) entre une partie supérieure de surface de roulement (3') et une partie inférieure de surface de roulement (3"), dans lequel la rainure (2) s'étend entre les flancs (5, 6) sous forme d'ondulations, **caractérisé en ce que** l'amplitude et/ou la longueur d'onde de l'onde selon laquelle s'étend la rainure ondulée (2) change(nt) dans la direction circonférentielle.

2. Segment de piston selon la revendication 1, **caractérisé en ce que** la rainure ondulée (2) forme une onde sinusoïdale ou une onde cosinusoïdale s'étendant autour du segment de piston, ou **en ce que** la rainure s'étend entre les flancs (5, 6) selon une onde asymétrique ou en forme de dents de scie.

3. Segment de piston selon la revendication 1 ou 2, **caractérisé en ce que** l'amplitude de l'onde augmente dans la direction des extrémités d'aboutement et/ou **en ce que** la longueur d'onde de l'onde diminue en direction des extrémités d'aboutement.

4. Segment de piston selon l'une quelconque des revendications 1 à 2, **caractérisé en ce que** l'amplitude de l'onde diminue dans la direction des extrémités d'aboutement et/ou **en ce que** la longueur d'onde de l'onde augmente dans la direction des extrémités d'aboutement.

5. Segment de piston selon l'une quelconque des revendications précédentes, **caractérisé en ce que** la rainure (2) se termine avant une zone d'aboutement du segment de piston.

6. Segment de piston selon l'une quelconque des revendications précédentes, **caractérisé en ce que** la rainure (2) présente sur la longueur de celle-ci une section transversale constante et de préférence une forme de section transversale constante, de profondeur constante et de largeur constante.

7. Segment de piston selon l'une quelconque des revendications précédentes, **caractérisé en ce que** la rainure (2) présente une section transversale ronde, ovale, elliptique, rectangulaire ou trapézoïdale.

8. Segment de piston selon la revendication 7, dans lequel la section transversale ronde de la rainure (2) présente de préférence un rayon de 0,2 à 2 mm, de préférence de 0,4 à 1,6 mm et de plus grande préférence de 0,6 à 1,2 mm.

9. Segment de piston selon l'une quelconque des revendications précédentes, **caractérisé en ce que** la rainure (2) présente un flanc de rainure supérieur (8) et un flanc de rainure inférieur (9), dans lequel le flanc de rainure supérieur (8) forme avec la partie supérieure de surface de roulement (3') un angle de 45° à 135°, de préférence de 60° à 120°, de plus grande préférence de 70° à 110°, et dans lequel le flanc de rainure inférieur (9) forme avec la partie inférieure de surface de roulement (3") un angle inférieur de 90° à 170°, de préférence de 110° à 160° et de plus grande préférence de 120° à 150°.

10. Segment de piston selon la revendication 9, **caractérisé en ce que** l'angle supérieur est plus petit que l'angle inférieur de 2° à 30°, de préférence de 4° à 20°, et de plus grande préférence de 6° à 10°.

11. Segment de piston selon la revendication 9 ou 10, **caractérisé en ce qu'**une arête de l'angle supérieur présente un rayon de courbure supérieur de 10 à 50 µm, **en ce que** l'arête de l'angle inférieur présente un rayon de courbure inférieur de 40 µm à 120 µm, et dans lequel de préférence le rayon de courbure supérieur est plus petit que le rayon de courbure inférieur de 10 µm à 40 µm.

12. Segment de piston selon l'une quelconque des revendications précédentes, **caractérisé en ce que** la surface de roulement extérieure (3) présente un rayon de courbure entre 10 et 60 mm, de préférence entre 20 et 40 mm, et de plus grande préférence entre 25 et 30 mm.

13. Segment de piston selon l'une quelconque des revendications précédentes, **caractérisé en ce que** le nombre des périodes de la courbe ondulée est entier et/ou **en ce que** dans une vue de dessus de la surface de roulement (3) du segment de piston (1), la rainure (2) est réalisée de manière substantiellement symétrique, et/ou **en ce que** le nombre des périodes de la courbe de profondeur et de la courbe de largeur est compris dans une plage entre 4 et 36, limites comprises, de préférence entre 6 et 24 et de plus grande préférence entre 8 et 12.

14. Segment de piston selon l'une quelconque des revendications précédentes, **caractérisé en ce que** la rainure (2) se compose de deux types différents de parties, le premier type de parties s'étendant dans la direction circonférentielle et le deuxième type de parties étant relié au premier type de parties selon un angle aigu, les deux types de parties étant en alternance reliés ensemble au niveau de leurs extrémités.

15. Segment de piston selon l'une quelconque des revendications précédentes, **caractérisé en ce que** la rainure (2) se termine dans des réservoirs (14).

16. Segment de piston selon l'une quelconque des revendications précédentes, **caractérisé en ce que** la rainure (2) se termine en s'effilant vers les extrémités d'aboutement (A, B).
